## Europäisches Patentamt

(19) **European Patent Office**

**Office européen des brevets**

(11) Veröffentlichungsnummer: **0 205 725**
A2

(12) # EUROPÄISCHE PATENTANMELDUNG

(21) Anmeldenummer: **86100223.6**

(22) Anmeldetag: **09.01.86**

(51) Int. Cl.⁴: **B 60 S 1/40**

(30) Priorität: **28.01.85 DE 3502715**

(43) Veröffentlichungstag der Anmeldung: **30.12.86**
**Patentblatt 86/52**

(84) Benannte Vertragsstaaten: **FR GB IT**

(71) Anmelder: **SWF Auto-Electric GmbH, Stuttgarter Str. 119, D-7120 Bietigheim-Bissingen (DE)**

(72) Erfinder: **Noack, Klauspeter, Willsbacher Strasse 23, D-7104 Obersulm 1 (DE)**
Erfinder: **Prohaska, Hans, Nelkenweg 44, D-7120 Bietigheim-Bissingen (DE)**

(54) **Wischhebel, Wischarm, Wischblatt und Verbindungselement für einen Wischhebel.**

(57) Es wird eine Rastverbindung zwischen einem Wischarm und einem Gelenkbolzen an einem Wischblatt beschrieben, wobei die lichte Weite der Rastaufnahme an einem Verbindungselement bei einer Schwenkbewegung zwischen Wischarm und Wischblatt selbsttätig erweiterbar ist, sodaß eine einfache Demontage des Wischblatts vom Wischarm möglich ist. Wischarm, Wischblatt und Verbindungselement sind dabei so ausgestaltet, daß eine Verbindung auch mit bisher gebräuchlichen Wischarmen und Wischblättern möglich ist.

A 12 852

<u>Wischhebel, Wischarm, Wischblatt und Verbindungselement für einen</u>
<u>Wischhebel</u>

Die Erfindung bezieht sich auf einen Wischhebel gemäß den Merkmalen des
Oberbegriffs des Anspruchs 1 sowie auf den Wischarm, das Wischblatt und ein
Verbindungselement für den Wischhebel.

Bei den meisten heute serienmäßig verwendeten Wischhebeln wird auf dem
Gelenkbolzen am Tragbügel des Wischblatts als Verbindungselement eine
zweischenklige Rastfeder gelagert, die dann mit einem Wischarm mit einem
U-förmig gekrümmten Haken verrastet wird. Diese vielfach bewährte Verbindung
zwischen Wischarm und Wischblatt ist verhältnismäßig teuer in der Herstellung,
weil das Verbindungselement als separates Teil gefertigt werden muß.
Vereinzelt wird auch beanstandet, daß die Montage, insbesondere die Demontage
umständlich ist, weil die beiden Schenkel des Verbindungselementes zum Lösen
von dem Wischarm gegeneinander gedrückt werden müssen.

Der vorliegenden Erfindung liegt die Aufgabe zugrunde, die Verbindung zwischen
einem Wischarm und einem Wischblatt konstruktiv zu vereinfachen und die
Montage und Demontage des Wischblattes vom Wischarm zu erleichtern.

Diese Aufgabe wird erfindungsgemäß mit den kennzeichnenden Merkmalen des
Anspruchs 1 gelöst.

Der wesentliche Gedanke der Erfindung besteht dabei darin, daß durch die
selbsttätige Aufweitung der Rastaufnahme bei einer Schwenkbewegung des
Wischblattes relativ zum Wischarm direkt die Verbindung zwischen Gelenkbolzen
und Verbindungselement gelöst wird, während bei den üblichen Konstruktionen
die Verbindung zwischend der Rastfeder und dem Wischarm gelöst wird.
Es ist zwar aus der DE-OS 32 22 891 bereits ein Wischhebel bekannt, bei dem
ebenfalls durch eine Schwenkbewegung zwischen Wischarm und Wischblatt die
Verbindung zwischen dem Gelenkbolzen und dem Verbindungselement gelöst wird,
dabei wird aber nicht die lichte Weite zwischen den beiden die Rastaufnahme
bildenden Schenkeln vergrößert, sondern ein Federlappen durch Anlage an der
von einer Kreisform abweichenden Mantelfläche des Gelenkbolzens ausgelenkt.
Eine solche Ausführung ist zwar montagefreundlich, aber wegen des unrunden
Gelenkbolzens teuer in der Herstellung. Aus der DE-AS 1 905 352 ist ein Wischhebel bekannt, bei dem das Verbindungselement bayonettartig an einem abgeflachten Gelenkbolzen angelenkt ist und nach einer Schwenkbewegung des Wischblatts relativ zum Wischarm von dem Gelenkbolzen gelöst werden kann. Bei dieser Ausführung ist jedoch das Verbindungselement nicht mit dem Gelenkbolzen verrastet, sondern formschlüssig gehalten. Diese Art der Verbindung ist nicht spielfrei und verursacht nach einiger Betriebszeit Geräusche.

Im Gegensatz zu diesem Stand der Technik ist bei der vorliegenden Erfindung eine spielfreie Rastverbindung zwischen dem Verbindungselement und dem Gelenkbolzen gegeben, die durch selbsttätige Aufweitung der Rastaufnahme leicht lösbar ist.

Der Grundgedanke der Erfindung kann bei einer Vielzahl von bekannten Verbindungselementen verwirklicht werden. Bevorzugt wird jedoch eine Ausführung, die von den bewährten im Querschnitt U-förmigen Rastfedern ausgeht. Bei diesen Ausführungen sind die Schenkel gegeneinander um eine Biegelinie im Bereich der Scheitelkrümmung auslenkbar, wodurch die lichte Weite der Rastaufnahme vergrößert wird. Dabei kann die Rastaufnahme im Mittelpunkt der Scheitelkrümmung angeordnet sein. Damit nun zum Lösen der Verbindung kein großer Kraftaufwand erforderlich ist, wird der Lösenocken so am Wischblatt angeordnet, daß er möglichst am freien Ende des einen Schenkels angreift. Dies kann allerdings zur Folge haben, daß wegen dem dann großen Abstand zwischen dem Lösenocken und dem Gelenkbolzen der erforderliche Schwenkwinkel zwischen Wischarm und Wischblatt nicht mehr gewährleistet werden kann. Bevorzugt wird daher eine Ausführung, bei der die Rastaufnahme mit Abstand zum Mittelpunkt der Scheitelkrümmung an den Schenkeln der Rastfeder ausgebildet ist, wie dies in der DE-OS 28 05 845 beschrieben ist. Durch diese **exzentrische Lagerung der Rastfeder wird der Abstand zwischen der Rastaufnahme und der Biegelinie im Bereich der Scheitelkrümmung gegenüber der zuvor erwähnten Ausführung vergrößert, sodaß keine allzu großen Lösekräfte erforderlich sind, wenn nun gemäß einer besonders bevorzugten Ausführung der Lösenocken nahe dem Gelenkbolzen an der Rastfeder angreift.** Dabei kann der Lösenocken zwischen der Scheitelkrümmung und der Rastaufnahme an der Rastfeder angreifen, doch es wird eine Ausführung bevorzugt, bei der dieser Lösenocken am freien Ende des einen Schenkels angreift.

A 12 852   - 3 -

Der Lösenocken kann bei einer ersten Ausführung der Erfindung formstabil von wenigstens einer, vorzugsweise von beiden Seitenwangen des Tragbügels in die Bewegungsbahn der Rastfeder hineinragen. Allerdings kann dann eine herkömmliche Rastfeder nicht mit einem derart ausgebildeten Wischblatt verrastet werden. Herkömmliche Rastfedern können aber verwendet werden, wenn der Lösenocken an einer Federzunge ausgebildet ist, die im Ruhezustand außerhalb der Bewegungsbahn der Rastfeder liegt und nur durch seitlichen Druck in die Bewegungsbahn eingreifen kann.

Die Erfindung bezieht sich auch auf die besondere Ausgestaltung eines Wischblatts sowie auf einen zugehörigen Wischarm, die im Sinne der vorstehenden Ausführungen miteinander verbindbar sind. Bei einer ersten Ausführung eines Wischblatts sind besonders ausgestaltete formstabile Lösenocken aus den Seitenwangen des Tragbügels herausgeprägt. Bei einer zweiten Ausführung, die mittels üblicher Verbindungselemente an den bisher üblichen Wischarmen anlenkbar ist, ist der Lösenocken an einer aus der Seitenwange des Tragbügels herausgestanzten Federzunge angeordnet.

Aus der DE-OS 26 36 646 ist zwar bereits ein Wischblatt mit einem aus der Seitenwange des Tragbügels herausgestanzten Ansatz bekannt, dieser Ansatz dient aber zur Sicherung des Wischarmhakens und nicht zum Lösen der Verbindung.

Natürlich sind Ausführungen denkbar, bei denen das Verbindungselement als separates Teil hergestellt und mit dem Wischarm in einer an sich bekannten Weise verrastet wird. Ein besonderer Vorteil des Grundgedankens der vorliegenden Erfindung besteht aber darin, daß das Verbindungselement nun unlösbar mit dem Wischarm verbunden werden kann. Beispielsweise könnte man den einen Schenkel einer üblichen Rastfeder direkt an das gerade auslaufende Ende eines Wischarms anspritzen.Besonders bevorzugt wird jedoch eine Ausführung, bei der die Wischstange in üblicher Weise aus einem Stahlband hergestellt ist und an seinem wischblattseitigen Endbereich hakenförmig abgebogen ist. Bei einer solchen Ausführung kann man nämlich die Elastizität des Stahlbandwerkstoffes zur Bildung der Rastaufnahme ausnutzen. Im Sinne der vorliegenden Erfindung ist es also durchaus möglich, einen etwa nach der DE-PS 1 077 088 ausgebildeten Wischarm unmittelbar mit dem Gelenkbolzen zu verrasten. Dabei soll aber die durch geeignete Formgebung des Wischarms an

A 12 852   -4-

diesem ausgebildete Rastaufnahme aufweitbar sein, während bei der bekannten Ausführung die auf dem Gelenkbolzen gelagerte zusäzliche Lagerbuchse aus einem elastischen Material ist.

Üblicherweise verwendet man für die Wischstange sendzimirverzinktes Material, wobei auf die Zinkschicht zur Verbesserung der Korossionsbeständigkeit dann noch eine Lackschicht aufgetragen wird. Problematisch bei diesem bisher üblichen Herstellverfahren ist, daß die Zinkschicht beim Biegen des Hakens bricht. Damit dort später keine Rostbildung auftritt, wird dieser Hakenbereich nach dem Biegen in einem zusätzlichen teuren Arbeitsgang nachverzinkt. Dieser Arbeitsgang kann vermieden werden, wenn man den Hakenbereich mit einer Schicht aus Kunststoff überzieht, wobei gemäß einer besonders bevorzugten Weiterbildung der Erfindung durch entsprechende Formgebung dieser Kunststoffschicht zugleich auch eine Rastaufnahme für den Gelenkbolzen gebildet wird. Das besonders bevorzugte Ausführungsbeispiel der vorliegenden Erfindung kann auch in der Weise charakterisiert werden, daß das hakenförmig gekrümmte Ende der Wischstange in ein herkömmliches Verbindungselement eingebettet wird.

Schließlich bezieht sich die vorliegende Erfindung auch auf ein Verbindungselement, das eine Anlenkung des nach dieser Erfindung ausgebildeten Wischblatts an herkömmliche Hakenwischarme ermöglicht. Dieses Verbindungselement ist dadurch gekennzeichnet, daß es in den Seitenwänden, die an den Innenflächen der Seitenwangen des Tragbügels anliegen, Aussparungen derart aufweist, daß trotz der vorstehenden Lösenocken eine ausreichende Schwenkmöglichkeit zwischen Wischarm und Wischblatt gewährleistet ist. Die Erfindung und deren vorteilhafte Ausgestaltungen werden nachstehend anhand der in der Zeichnung dargestellten Ausführungsbeispiele näher erläutert. Es zeigen:

Fig. 1   einen Teillängsschnitt durch einen Wischhebel in mehreren Stellungen zwischen Wischarm und Wischblatt,

Fig. 2   einen Schnitt durch eine Seitenwange des Tragbügels im Bereich eines Lösenockens,

Fig.3   eine Seitenansicht auf ein Wischarmende,

0205725 **SWF**

A 12 852 — 5 —

Fig.4 einen Schnitt entlang der Schnittlinie IV-IV,

Fig.5 einen Schnitt entlang der Schnittlinie V-V,

Fig.6 einen Teillängsschnitt durch einen Tragbügel eines Wischblatts,

Fig.7 einen Schnitt entlang der Schnittlinie VII-VII,

Fig.8 einen Längsschnitt durch ein Verbindungselement,

Fig.9 einen Querschnitt im Bereich des Gelenkbolzens und

Fig.10 einen Schnitt entlang der Schnittlinie X-X im Bereich des Lösenockens.

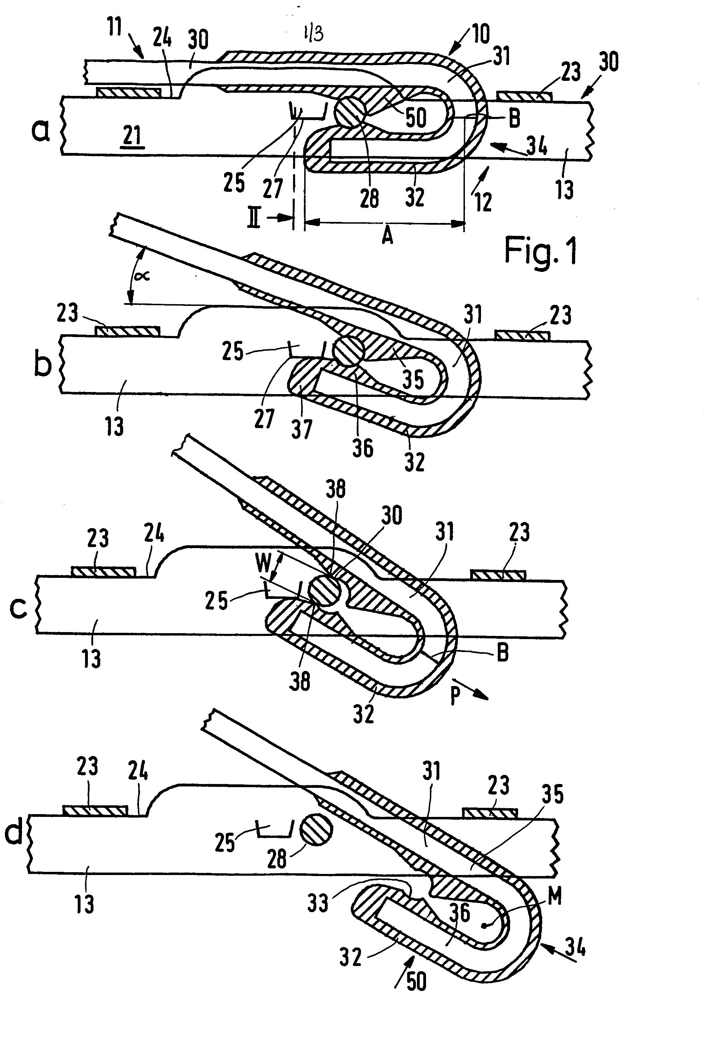

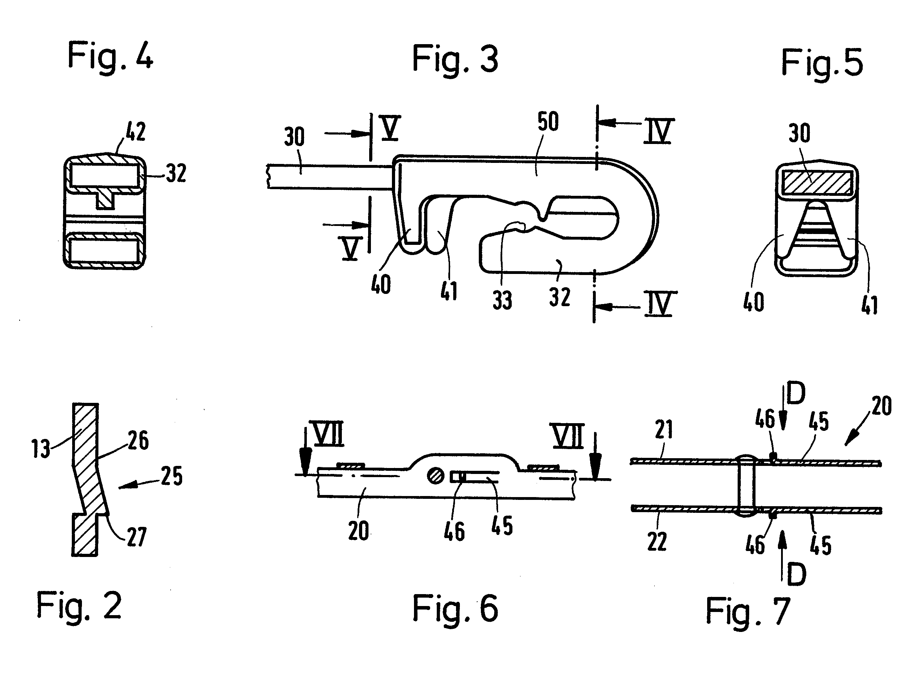

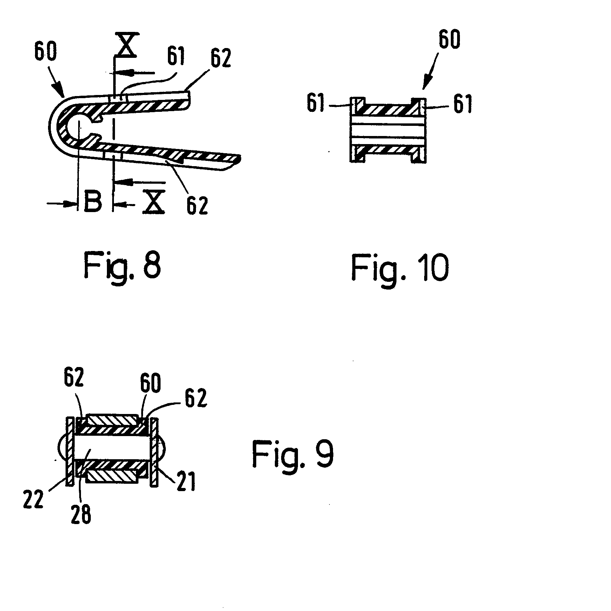

Zu einem insgesamt mit 10 bezeichneten Wischhebel gehören ein Wischarm 11 und ein Wischblatt 12, die in den Zeichnungen nur teilweise im Bereich der hier interessierenden Gelenkstelle dargestellt sind. Das Wischblatt 12 hat einen Tragbügel 13, der in bekannter Weise im Querschnitt U-förmig ausgebildet ist und zwei Seitenwangen 21,22 (vgl. Fig. 9) und einen diese Seitenwangen verbindenden Steg 23 mit einem Durchbruch 24 im Bereich der Gelenkstelle aufweist. Aus den beiden Seitenwangen 21 und 22 sind keilförmige Lösenocken 25 herausgeprägt, deren Spitzen 26 zur Wischarmseite hinzeigen und deren Grundflächen 27 der nicht gezeigten Wischgummileiste benachbart sind. Fig. 1 zeigt, daß diese Lösenocken 25 nahe dem die beiden Seitenwangen verbindenden Steg 23 angeordnet sind, wobei die Grundfläche 27 etwa in Höhe des Gelenkbolzens 28 liegt. Diese Lösenocken 25 nach Fig. 1 sind formstabil und unbeweglich an die Seitenwangen 21,22 des Tragbügels angeformt, wie Fig. 2 zeigt.

A 12 852 - 7 -

Zum Wischarm 11 gehört eine aus Stahlband hergestellte Wischstange 30 mit einem am wischblattseitigen Endbereich U-förmig gekrümmten Haken 31. Es kann sich dabei um eine übliche Wischstange handeln. Diese Wischstange 30 ist nun im Bereich des Hakens mit einer Schicht 32 aus Kunststoff allseitig überzogen, wobei durch geeignete Formgebung zugleich eine Rastaufnahme 33 im Abstand von dem Mittelpunkt M der Scheitelkrümmung 34 gebildet ist. Aus Fig.1 kann man entnehmen, daß die Kontur der Kunststoffschicht im Bereich zwischen den beiden sich gegenüberstehenden Schenkeln 35 und 36 des Hakens 31 der Kontur üblicher Rastfedern entspricht, wie sie ähnlich auch in der bereits erwähnten DE-OS 28 05 845 dargestellt ist. Diese Kunststoffschicht 32, die unmittelbar auf das Hakenende aufgespritzt ist, ist bei dem Ausführungsbeispiel nach Fig. 1 als Verbindungselement 50 anzusehen, das im Sinne der genannten Offenlegungsschrift exzentrisch am Gelenkbolzen 28 angelenkt ist.

Im folgenden wird nun zunächst die Demontage des Wischblatts vom Wischarm beschrieben. Fig. 1a zeigt den Wischarm 11 und das Wischblatt 12 in der Betriebsstellung. Wird nun der Wischarm 11 relativ zum Wischblatt 12 im Uhrzeigersinn verschwenkt, stößt schließlich das freie Ende 37 des Schenkels 36 an der Grundfläche 27 des Lösenockens 25 an, wie das Fig. 1b zeigt. Wird der Wischarm 11 weiter verschwenkt, wird durch den Lösenocken 25 die lichte Weite W der Rastaufnahme 33 über den Durchmesser des Gelenkbolzen 28 hinaus vergrößert, wie dies Fig. 1c zeigt. Dies ist möglich, weil die Wischstange 30 aus einem federelastischen Material hergestellt ist. Sobald die Verbindungslinie zwischen den vorderen Kanten 38 der Rastaufnahme 33 die Achse des Gelenkbolzens 28 schneidet, wird aufgrund der Rückstellkraft im Hakenbereich der Wischarm 11 bzw. das einstückig daran angespritzte Verbindungselement 50 ruckartig vom Gelenkbolzen 28 in Pfeilrichtung P gelöst, wonach der Wischarm 11 in üblicher Weise senkrecht aus dem Durchbruch 24 im Tragbügel 20 herausgezogen werden kann.

Insgesamt ist also zu Fig. 1 folgendes festzustellen:

Wischarm 11 und Verbindungselement 50 bilden eine untrennbare Einheit, wobei zwischen den beiden Schenkeln 35 und 36 eine Rastaufnahme 33 gebildet ist, in die der Gelenkbolzen 28 spielfrei einrastbar ist. Das Wischblatt 12 ist relativ zum Wischarm 11 um einen bestimmten Winkelbereich schwenkbar. Dieser

A 12 852 - 7 -

Winkelbereich hängt u.a. von der Lage des Lösenocken 25 und natürlich auch von der Form des Verbindungselementes ab. Dieser Winkelbereich ist in Fig. 1b mit $\alpha$ bezeichnet. Werden nun Wischarm und Wischblatt über diesen Winkelbereich $\alpha$ hinaus verschwenkt, wird durch diese Schwenkbewegung die lichte Weite W der Rastaufnahme 33 selbsttätig vergrößert, so daß das Wischblatt ohne großen Kraftaufwand vom Wischarm gelöst werden kann. Die beiden Schenkel 35 und 36 werden dabei um eine Biegelinie B im Bereich der Scheitelkrümmung 34 federnd ausgelenkt.

Dabei wird durch den geringen Abstand zwischen dem Lösenocken 25 und dem Gelenkbolzen 28 ein ausreichend großer Winkelbereich $\alpha$ gewährleistet. Damit man nur eine geringe Lösekraft aufwenden muß, greift der Lösenocken 25 am freien Ende 37 des Schenkels 36, also in größtmöglichem Abstand von der Biegelinie B an. Dieser Abstand A ist dabei umso größer, je größer der Abstand zwischen der Rastaufnahme 33 und dem Mittelpunkt M der Scheitelkrümmung 34 ist. Die in diesem Absatz erläuterten Merkmale wirken also kombinatorisch miteinander und sind besonders bei einer Ausführung von Bedeutung, bei der Elastizität des Wischarmhakens zur Verrastung mit dem Gelenkbolzen ausgenutzt wird. Dabei ist auch noch darauf hinzuweisen, daß der geringe Abstand zwischen Lösenocken 25 und Gelenkbolzen 28 aus Stabilitätsgründen vorteilhaft ist, denn durch den üblicherweise als Niet ausgebildeten Gelenkbolzen 28 wird der Abstand zwischen den Seitenwangen des Tragbügels definiert und es kann keine Verschiebung der Lösenocken 25 nach außen auftreten, wenn das Verbindungselement an den Lösenocken anschlägt.

Die Lösenocken 25 sind formstabil direkt aus dem Tragbügel herausgeprägt, wofür kein erhöhter Fertigungsaufwand entsteht. Die Seitenwange 21, 22 hat dabei keinen Durchbruch, wie Fig. 2 zeigt, was im Interesse einer ausreichenden Stabilität und einer guten Führung des Wischblatts am Wischarm vorteilhaft ist.
Der nach Art üblicher Rastfedern allseitig umspritzte Hakenbereich der Wischstange 30 ist bestens korossionsgeschützt. Dabei kann man ohne wesentliche Kosten in einem Arbeitsgang zusätzliche, die Wischfunktion verbessernde Mittel anspritzen. So zeigen die Fig. 3 bis 5 eine Ausführung mit zwei Führungslappen 40 und 41, die in Wischarmlängsrichtung versetzt angeordnet sind. Der Versatz zwischen den beiden Führungslappen ist aus spritztechnishen Gründen zweckmäßig. Die Führungslappen 40 und 41 liegen federnd an den Innenflächen der Seitenwangen 21,22 des Tragbügels 20 an und verbessern die Führung. Aus Fig. 4 ist auch ersichtlich, daß die Oberfläche 42 der Kunststoffschicht 32 geneigte Flächen aufweist, die eine Windleitfunktion erfüllen, sodaß der Abhebeneigung des Wischers bei höheren Fahrgeschwindigkeiten entgegengewirkt wird. Bei dieser Gelegenheit wird darauf hingewiesen, daß man auch die gesamte Wischstange mit einer Kunststoffschicht überziehen kann, die ggf. die Form eines Windleitbleches aufweisen kann. Damit spart man dann das kostspielige Lackieren der Wischstange und man kann einen preisgünstigeren Bandstahl ohne Korossionsschutz verwenden.

In den Fig. 6 und 7 ist ein Teil eines Tragbügels 20 dargestellt, bei dem keine formstabilen Lösenocken vorgesehen sind. Bei dieser Ausführung sind vielmehr aus den Seitenwangen 21,22 des Tragbügels 20 bewegliche Federzungen 45 herausgestanzt, die einen aus der Außenfläche des Tragbügels 20 hervorstehenden Ansatz 46 als Betätigungshandhabe aufweisen. Normalerweise liegen diese Federzungen 45 außerhalb des Bewegungsbereichs des Verbindungselements, sie können aber durch Druck in Pfeilrichtung D in den Bewegungsbereich hineingebracht werden und erfüllen dann die Funktion der Lösenocken 25. Ein derart ausgebildetes Wischblatt hat den Vorteil, daß es sowohl an einem Wischarm nach Fig. 1 als auch an einem bisher üblichen Wischarm mittels eines herkömmlichen Verbindungselements anlenkbar ist.

Die Fig. 8 bis 10 zeigen schließlich ein im wesentlichen herkömmliches Verbindungselement 60 jedoch mit Aussparungen 61 in den Seitenwänden 62. Wie Fig. 9 zeigt, liegen diese Seitenwände 62 im Bereich des Gelenkbolzens 28 an den Seitenwangen 21,22 des Tragbügels 20 an. Die Aussparungen 61 befinden sich in einem geringen Abstand B von dem Anlenkpunkt, wobei dieser Abstand der Entfernung der Lösenocken vom Gelenkbolzen entspricht. Damit ist sichergestellt, daß ein Wischblatt mit Lösenocken über dieses spezielle Verbindungselement 60 an herkömmlichen Wischarmen anlenkbar ist. Da außerdem auch herkömmliche Wischblätter nach Entfernung des Verbindungselementes an einem Wischarm nach Fig. 1 anlenkbar sind, ist eine beliebige Kombination herkömmlicher Teile mit den erfindungsgemäß ausgebildeten Teilen möglich. Allerdings kann man herkömmliche Wischblätter ohne einen Lösenocken nur mit einem Werkzeug von dem Wischarm nach dieser Erfindung lösen. In diesem Zusammenhang wird darauf hingewiesen, daß für die speziellen Ausgastaltungen

A 12 852                        - 14 -

von Wischarm, Wischblatt und Verbindungselement selbständiger Schutz
beansprucht wird, da diese Ausführungen auch mit herkömmlichen Teilen
zusammenwirken können.

Abschließend wird nur beispielhaft auf einige Alternativen im Rahmen der
vorliegenden Erfindungsgedanken hingewiesen. Es ist nicht unbedingt notwendig,
aber aus Stabilitätsgründen äußerst vorteilhaft, daß der Endbereich des Hakens
bis in den Bereich unterhalb der Rastaufnahme reicht. Denkbar wäre auch eine
Lösung, bei der der Haken nur bis in den Bereich der Scheitelkrümmung reicht
oder sogar noch davor endet. In einem solchen Fall könnte also nur der eine
Schenkel des Verbindungselementes an den Wischarm angespritzt sein. Bei
Verzicht auf die Kunststoffschicht könnte man Rastaufnahmen auch unmittelbar
in die metallische Wischstange einprägen, doch verliert man dann den Vorteil
der guten Korossionsbeständigkeit. Eine solche Ausführung wäre jedoch bei
Kunststoffwischarmen denkbar, zumal dann auch eine metallische Berührung mit
dem Gelenkbolzen vermieden wäre. Bei allen in der Zeichnung dargestellten
Ausführungsbeispielen greift der Lösenocken am Endbereich eines Schenkels an.
Denkbar sind aber auch Ausführungen, bei denen der Lösenocken zwischen der
Scheitelkrümmung und der Rastaufnahme an einem Schenkel angreift. Man könnte
schließlich einen Lösenocken auch so anordnen, daß er bei einer
Schwenkbewegung des Wischarmes relativ zum Wischblatt an beiden Schenkeln
zugleich angreift und damit die Rastaufnahme erweitert. Schließlich müssen die
Rastaufnahmen nicht notwendigerweise an den Seitenwangen des Tragbügels
angeordnet sein. Man könnte sie beispielsweise auch an den Steg des Tragbügels
anformen.

SWF  Auto-Electric  GmbH
7120 Bietigheim-Bissingen

1

PAL/A 12 852
Kübler/Tü
22.1.1985

### Wischarm, Wischblatt und Verbindungselement für einen Wischhebel

Patentansprüche:

1.   Wischhebel mit einem Wischarm und einem im Wischbetrieb um einen bestimmten Winkel schwenkbar daran aufgehängten Wischblatt sowie einem Verbindungselement zwischen Wischarm und Wischblatt, wobei das Verbindungselement zwischen zwei Schenkeln, die federnd gegeneinander auslenkbar sind, eine Rastaufnahme für einen am Tragbügel des Wischblatts fixierten Gelenkbolzen aufweist, dadurch gekennzeichnet, daß bei einer Schwenkbewegung zwischen Wischblatt (12) und Wischarm (11) über den bestimmten Winkel ($\alpha$) hinaus durch wenigstens einen Lösenocken (25) am Wischblatt (12) die lichte Weite (W) der Rastaufnahme (33) zwischen den beiden Schenkeln (21,22) des Verbindungselements (50) über den Durchmesser des Gelenkbolzens (28) hinaus vergrößert wird.

A 12 852        - 2 -

2. Wischhebel nach Anspruch 1,dadurch gekennzeichnet, daß das Verbindungselement (50) eine im Querschnitt im wesentlichen U-förmige Rastfeder ist, deren erster Schenkel (35) mit der Wischstange (30) des Wischarms (11) verbunden ist und deren Schenkel (35,36) relativ zueinander um eine Biegelinie (B) im Bereich der Scheitelkrümmung (34) zwischen den beiden Schenkeln (35,36) federnd auslenkbar ist.

3. Wischhebel nach Anspruch 2, dadurch gekennzeichnet, daß die Rastaufnahme etwa im Mittelpunkt der Scheitelkrümmung an den Schenkeln der Rastfeder ausgebildet ist.

4. Wischhebel nach Anspruch 2,dadurch gekennzeichnet, daß die Rastaufnahme (33) mit Abstand zum Mittelpunkt (M) der Scheitelkrümmung (34) an den Schenkeln (35,36) des Verbindungselements (50) ausgebildet ist.

5. Wischhebel nach Anspruch 4, dadurch gekennzeichnet, daß der Lösenocken zwischen der Scheitelkrümmung und der Rastaufnahme an wenigstens einem der Schenkel angreift.

6. Wischhebel nach Anspruch 3 oder 4, dadurch gekennzeichnet, daß der Lösenocken (25) am freien Ende (37) eines der Schenkel (35,36) angreift.

7. Wischhebel nach Anspruch 5 oder 6, dadurch gekennzeichnet, daß der Lösenocken (25) nahe dem vorzugsweise als Nietzapfen ausgebildeten Gelenkbolzen (28) an einem der Schenkel (36) angreift.

8. Wischhebel nach wenigstens einem der vorhergehenden Ansprüche, dadurch gekennzeichnet, daß der Lösenocken (25) formstabil von wenigstens einer Seitenwange (21,22) des Tragbügels (20) des Wischblatts (12) in die Bewegungsbahn des Verbindungselements (50) hineingreift.

9. Wischhebel nach wenigstens einem der vorhergehenden Ansprüche, dadurch gekennzeichnet, daß der Lösenocken (25) an einer Federzunge (45) ausgebildet ist, die im Ruhezustand außerhalb der Bewegungsbahn des Verbindungselemnts (50) liegt und in der Arbeitsstellung in die Bewegungsbahn hineinragt.

10. Wischblatt insbesondere für einen Wischhebel gemäß wenigstens einem der
vorherigen Ansprüche, dadurch gekennzeichnet, daß nahe dem die beiden
Seitenwangen (21,22) verbindenden Gelenkbolzen (28) an wenigstens einer
Seitenwange (21,22) des Tragbügels (20) formstabil ein Lösenocken (25)
herausgeprägt ist.

11. Wischblatt nach Anspruch 10, dadurch gekennzeichnet, daß der Lösenocken
(25) keilförmig ausgebildet ist, wobei die Spitze (26) zu der Wischarmseite
zeigt und die Grundfläche (27) als Anschlag für das Verbindungselement (50)
dient.

12. Wischblatt nach Anspruch 11, dadurch gekennzeichnet, daß die Grundfläche
(27) des keilförmigen Lösenockens (25) wenigstens annähernd in Höhe des
Gelenkbolzens (28) angeordnet ist.

13. Wischblatt insbesondere für einen Wischhebel gemäß wenigstens einem der
Ansprüche 1 bis 9, dadurch gekennzeichnet, daß aus wenigstens einer
Seitenwange (21,22) des Tragbügels (20) eine bewegliche Zunge (45)
herausgeschert ist, deren Endbereich als Lösenocken (25) dient.

14. Wischblatt nach Anspruch 13, dadurch gekennzeichnet, daß die Zunge (45)
in Wischblattlängsrichtung etwa in Höhe des Gelenkbolzens (28) am Tragbügel
(20) angeordnet ist.

15. Wischblatt nach Anspruch 13 oder 14, dadurch gekennzeichnet, daß die
Zunge (45) im Endbereich einen aus der Außenfläche der Seitenwange (21,22) des
Tragbügels (20) hervorstehenden Ansatz (46) als Betätigungshandhabe aufweist.

16. Wischblatt nach wenigstens einem der Ansprüche 10 bis 16, daß an beiden
Seitenwangen (21,22) Lösenocken (25) ausgebildet sind.

17. Wischarm insbesondere für einen Wischhebel gemäß wenigstens einem der
Ansprüche 1 bis 9, dadurch gekennzeichnet, daß der eine Schenkel des
Verbindungselements an einem gerade auslaufenden Ende der Wischstange fixiert,
vorzugsweise aus Kunststoff angespritzt ist.

A 12 852           - 4 -

18. Wischarm insbesondere für einen Wischhebel gemäß wenigstens einem der Ansprüche 1 bis 9, dadurch gekennzeichnet, daß die Wischstange (30) aus einem Stahlband hergestellt ist und im wischblattseitigen Endbereich einen U-förmig gekrümmten Haken (31) aufweist, wobei die Elastizität dieses Stahlbandes zur Bildung der Rastverbindung mit dem Gelenkbolzen (28) ausgenutzt wird.

19. Wischarm nach Anspruch 18, dadurch gekennzeichnet, daß unmittelbar in die metallische Wischstange eine Rastaufnahme für den Gelenkbolzen eingearbeitet ist.

20. Wischarm insbesondere nach Anspruch 18, dadurch gekennzeichnet, daß der Hakenbereich der Wischstange (30) allseitig mit einer Kunststoffschicht (32) umspritzt ist.

21. Wischarm nach Anspruch 20, dadurch gekennzeichnet, daß die Rastaufnahme (33) zwischen den beiden Schenkeln (35,36) der Wischstange (30) im Hakenbereich durch entsprechende Formgebung der Kunststoffschicht (32) gebildet ist.

22. Wischarm nach Anspruch 21 oder 22, dadurch gekennzeichnet, daß zwei vorzugsweise federnde Führungslappen (40,41) an den Wischarm (11) angespritzt sind, die in der Betriebsstellung von Wischarm und Wischblatt an den Innenflächen der Seitenwangen (21,22) des Tragbügels (20) anliegen.

23. Wischarm nach Anspruch 22, dadurch gekennzeichnet, daß die Führungslappen (40,41) in Längsrichtung des Wischarms (11) versetzt angeordnet sind.

24. Wischarm nach wenigstens einem der Ansprüche 17 bis 23, dadurch gekennzeichnet, daß die metallische Wischstange (30) über nahezu die gesamte Länge mit einer Kunststoffschicht überzogen ist.

25. Wischarm nach Anspruch 24, dadurch gekennzeichnet, daß die Kunststoffschicht wenigstens abschnittsweise als Windleitschaufel ausgebildet ist.

26. Verbindungselement insbesondere für ein Wischblatt gemäß den Ansprüchen 10 bis 12, dadurch gekennzeichnet, daß in die an den Innenflächen der Tragbügelseitenwangen (21,22) anliegenden Seitenwände (62) Aussparungen (61) eingearbeitet sind, deren Abstand (B) zum Anlenkpunkt des Verbindungselements dem Abstand der Lösenocken (25) vom Gelenkbolzen (28) entspricht.

Fig. 1

Fig. 4

Fig. 3

Fig. 5

42

32

30

50

V

IV

V

V

40   41   33   32

IV

30

40   41

13

26

25

27

VII

VII

20   46   45

D

46   45   20

21

22

46   45

D

Fig. 2

Fig. 6

Fig. 7

2/3

0205725

Fig. 8

Fig. 10

Fig. 9